# EUROPÄISCHE PATENTSCHRIFT

(11) **EP 0 828 316 B1**
(45) Veröffentlichungstag und Bekanntmachung des Hinweises auf die Patenterteilung: **31.10.2001**
(21) Anmeldenummer: 97114328.4
(22) Anmeldetag: 20.08.1997
(51) Int. Cl.: H01R 9/26, H01R 25/00, H02B 1/052, H05K 7/14

(54) **Anschlussblock, der auf einer Tragschiene festlegbar ist**
Terminal block attachable on a mounting rail
Bloc de connexion fixable sur un support profilé

(30) Priorität: 04.09.1996 DE 19635821
(43) Veröffentlichungstag der Anmeldung: 11.03.1998
(73) Patentinhaber: Weidmüller Interface GmbH & Co., 32760 Detmold (DE)
(72) Erfinder: Eggert, Gerhard, 32760 Detmold (DE); Jaschke, Bernhard, 32791 Lage (DE); Hanning, Walter, 32758 Detmold (DE); Wilmes, Manfred, 32760 Detmold (DE)
(74) Vertreter: Stracke, Alexander, Dipl.-Ing.

(56) Entgegenhaltungen:
- EP-A- 0 709 933
- DE-A- 4 303 717

## Beschreibung

Die vorliegende Erfindung betrifft einen Anschlußblock, der auf einer Tragschiene festlegbar ist, gemäß dem Oberbegriff des Anspruches 1.

Bei einem solchen Anschlußblock, der aus der DE 44 38 806 C1 bekannt ist, ist jede Anschlußscheibe in Längsrichtung der Tragschiene auf ein separates Aufnahmeprofil aufgesteckt, wenngleich quer zur Längsrichtung auf einem Aufnahmeprofil mehrere Anschlußscheiben festgesetzt sein können.

Üblicherweise sind dabei die sich in Längsrichtung der Tragschiene erstreckenden Anschlußscheiben untereinander formschlüssig verrastet. Aufgrund der Zuordnung eines einzigen Aufnahmeprofils zu jeder Anschlußscheibe ist die Montage eines solchen Anschlußblocks relativ aufwendig.

Eine gewünschte, platzsparende Montage von Anschlußblöcken, die parallel nebeneinander verlaufend angeordnet sind, ist bislang nur mit einem erheblichen Aufwand möglich. Keinesfalls jedoch im Sinne eines modularen Aufbaus, der eine den jeweiligen Anforderungen angepaßte Montage möglich macht.

Der vorliegenden Erfindung liegt daher die Aufgabe zugrunde, einen Anschlußblock der gattungsgemäßen Art so zu gestalten, das mit konstruktiv einfachsten Mitteln leicht an unterschiedliche Anforderungen anpaßbar ist.

Diese Aufgabe wird durch einen Anschlußblock gelöst, der die Merkmale des Anspruches 1 aufweist.

Erst einmal wird die Montage eines Anschlußblocks dadurch wesentlich erleichtert, daß mehrere Anschlußscheiben auf ein gemeinsames Aufnahmeprofil aufgesteckt . sind, das anschließend als Einheit mit der Tragschiene verbunden werden kann.

Insoweit gestaltet sich auch eine Demontage wesentlicher einfacher als bisher.

Des weiteren ist ein modularer Aufbau eines Anschlußblockes quer zur Erstreckungsrichtung möglich, wodurch naturgemäß die Verwendungsfähigkeit um ein Vielfaches verbessert wird.

Dabei ist die Anzahl der dann nebeneinander liegenden Aufnahmeprofile und der darauf festgesetzten Anschlußscheiben je nach Erfordernis beliebig.

Für einen solchen Gesamt-Anschlußblock reicht u.U. eine Tragschiene zur Befestigung aus, was zu einer Kostensenkung beiträgt.

Eine weitere Kostenreduzierung ergibt sich aus der Fertigung des Aufnahmeprofiles, das nach einem vorteilhaften Gedanken der Erfindung aus einem Strangpreßprofil gebildet wird, das je nach Erfordernis, entsprechend abgelängt wird.

Nach einer weiteren vorteilhaften Ausgestaltung der Erfindung ist vorgesehen, daß die parallel nebeneinander liegenden Aufnahmeprofile durch Nut-Feder-Verbindung aneinander festgelegt sind, wobei die jeweiligen Querschnitte T- oder schwalbenschwanzförmig ausgeformt sein können.

Den Aufnahmeprofilen können durchaus auch andere Funktionen zugewiesen sein, wie beispielsweise einer solchen als Kabelkanalführung oder eines Bezeichnungskanals.

Zur Verschiebesicherung der miteinander verbundenen Anschlußscheiben auf dem Aufnahmeprofil können dort endseitig Endscheiben angeordnet sein, die mit den letzten Anschlußscheiben verrastet sind und die jeweilige Stirnfläche des Aufnahmeprofils zumindest teilweise überdecken.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:

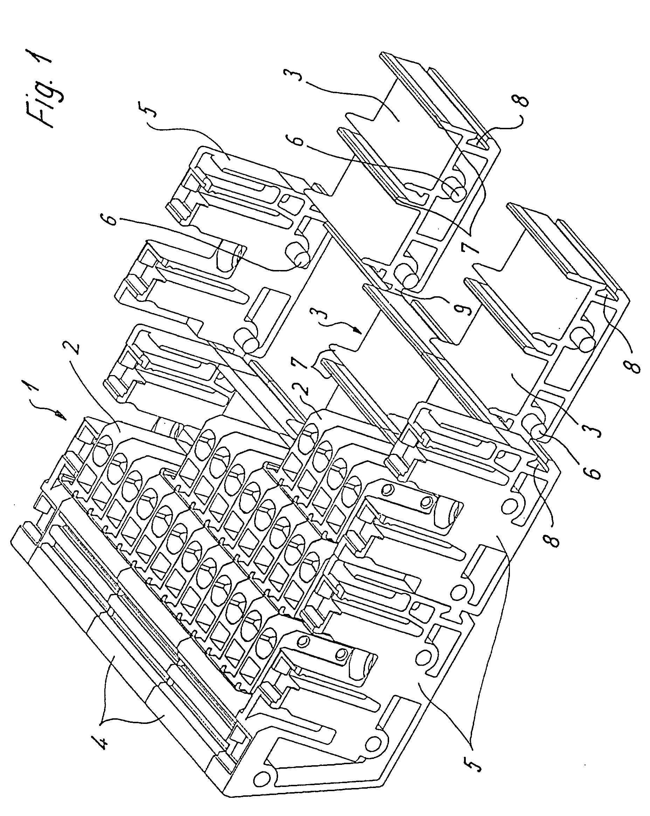

- Figuren 1 bis 3: jeweils verschiedene Ausführungsbeispiele der Erfinung in perspektivischer Darstellung.

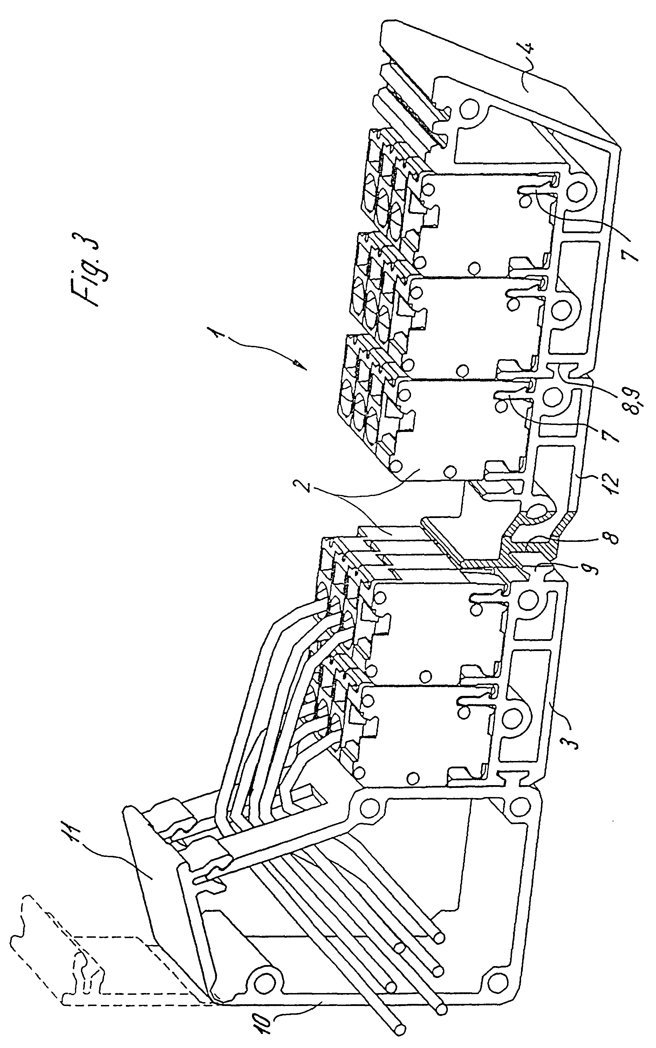

In den Fig. 1 und 3 ist jeweils ein Anschlußblock dargestellt, der insgesamt mit dem Bezugszeichen 1 versehen ist.

Dieser Anschlußblock 1 besteht aus mehreren, hintereinander angeordneten, auf Aufnahmeprofile 3,4,12 aufgesteckten Anschlußscheiben 2.

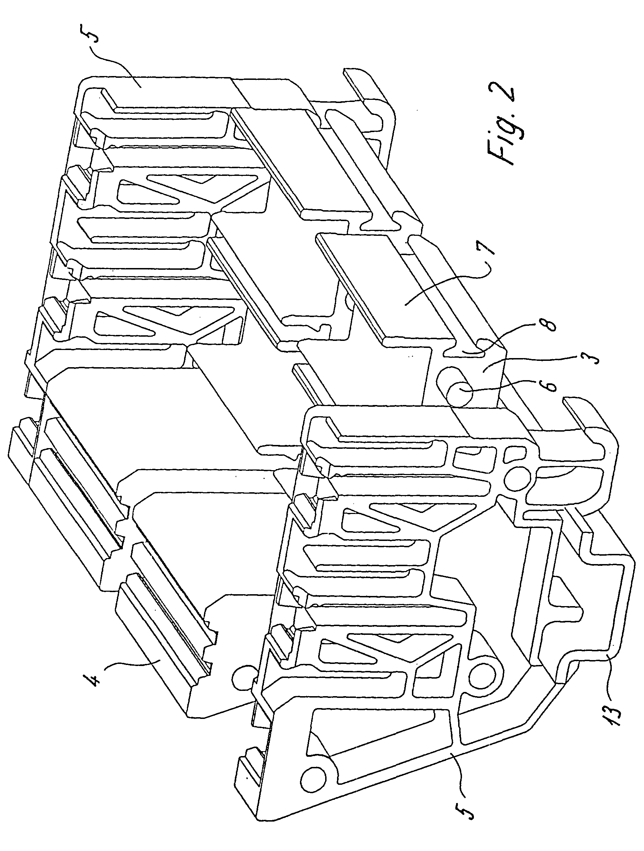

Die Aufnahmeprofile 3,4,12 sind auf einer Tragschiene 13 (Fig. 2) festgelegt, wobei mehrere Aufnahmeprofile 3,4,12 parallel nebeneinanderliegend miteinander verbunden sind. Anstelle einer Tragschiene 13 kann auch eine ebene Unterlage vorgesehen sein, auf der der Anschlußblock 1 befestigt wird.

Die Verbindung der Aufnahmeprofile 3,4,12 erfolgt formschlüssig, im vorliegenden Fall mittels einer Nut-Feder-Verbindung, bei der die Nut 8 und die Feder 9 schwalbenschwanzförmig ausgebildet sind.

Bei dem in den Fig. 1 und 2 gezeigten Ausführungsbeispiel ist ein Aufnahmeprofil als ein einen seitlichen Abschluß darstellender Bezeichnungskanal ausgebildet. In dem in der Fig. 3 gezeigten Beispiel wird ein dem Bezeichnungskanal 4 gegenüberliegendes seitliches Abschlußprofil durch einen Kabelkanal 10 gebildet, der durch einen mittels eines Filmscharnieres festgelegten Deckel 11 verschließbar ist.

Als weitere Variante der Erfindung ist in der Fig. 3 erkennbar, daß ein Aufnahmeprofil so geformt ist, daß es ein Schirmungselement 12 darstellt.

Auf ihrer den Anschlußscheiben 2 zugewandten Seite weisen die Aufnahmeprofile 3 parallel und mit Abstand zueinander verlaufende Rastschenkel 7 auf, die in entsprechend ausgeformte Schlitze der Anschlußscheiben 2 eingreifen und mit diesen verrasten.

Wie in den Fig. 1 und 2 besonders klar zu erkennen ist, sind hintereinander liegend mehrere Aufnahmeprofile 3 vorgesehen, die an einer Stirnseite Zapfen 6 aufweisen, die in zugeordnete und angepaßte Löcher, die in das jeweils davor liegende Aufnahmeprofil 3 eingelassen sind, eingesteckt werden. Hierdurch wird ein sicherer Halt untereinander, zumindest in der Ebene gewährleistet.

Zur Verschiebesicherung der Anschlußscheiben 2 sind Endscheiben 5 vorgesehen, die auf Zapfen 6 der Aufnahmeprofile 3 aufgesteckt sind, wobei es sinnvoll ist, diese Verbindung als Reibschlußverbindung auszubilden, so daß eine einfache Montage bzw. Demontage möglich ist.

## Patentansprüche

1. Anschlußblock (1), der auf einer Tragschiene (13) festlegbar ist, und der aus mehreren, in Längsrichtung der Tragschiene (13) hintereinander angeordneten, auf Aufnahmeprofilen (3,4,12) aufgesteckten Anschlußscheiben (2) besteht, wobei mehrere Aufnahmeprofile (3,4,12), in Längsrichtung der Tragschiene (13), parallel nebeneinander verlaufend, formschlüssig miteinander verbindbar sind **dadurch gekennzeichnet, daß** auf jedes Aufnahmeprofil (3,4,12), in Längsrichtung der Tragschiene (13), mehrere Anschlußscheiben (2) hintereinander aufsteckbar sind.

2. Anschlußblock nach Anspruch 1, **dadurch gekennzeichnet, daß** ein Aufnahmeprofil als Kabelkanal ausgebildet ist.

3. Anschlußblock nach Anspruch 1, **dadurch gekennzeichnet, daß** ein Aufnahmeprofil als Schirmungselement (12) gestaltet ist.

4. Anschlußblock nach Anspruch 1, **dadurch gekennzeichnet, daß** mehrere Anschlußprofile (3,4,12), in Längsrichtung der Tragschiene (13), hintereinander vorgesehen sind.

5. Anschlußblock nach Anspruch 4, **dadurch gekennzeichnet, daß** die, in Längsrichtung der Tragschiene, hintereinander liegenden Aufnahmeprofile (3,4,12) miteinander korrespondierende Verbindungsmittel aufweisen.

6. Anschlußblock nach Anspruch 5, **dadurch gekennzeichnet, daß** die Verbindungsmittel aus an einer Stirnseite angeordneten Zapfen (6) und zugeordneten und angepaßten Öffnungen des anliegenden Aufnahmeprofiles (3,4,12) bestehen.

7. Anschlußblock nach Anspruch 1, **dadurch gekennzeichnet, daß** die Aufnahmeprofile (3,4,12) im Bereich ihrer einander zugewandten Seiten miteinander in Wirkverbindung stehenden Formschlußelementen versehen sind.

8. Anschlußblock nach Anspruch 7, **dadurch gekennzeichnet, daß** die Formschlußelemente als Nut (8) und Feder (9) ausgebildet sind, vorzugsweise schwalbenschwanzförmig.

9. Anschlußblock nach Anspruch 1, **dadurch gekennzeichnet, daß** jedes Aufnahmeprofil (3,4,12) aus einem abgelängten Strangpreßprofil besteht.

## Claims

1. Connection block (1) which can be secured on a carrying rail (13) and which comprises a plurality of connection plates (2) which are arranged one behind the other in the longitudinal direction of the carrying rail (13) and are plugged onto accommodating profiles (3, 4, 12), it being possible for a plurality of accommodating profiles (3, 4, 12) to be connected to one another in a form-fitting manner such that they run parallel one beside the other in the longitudinal direction of the carrying rail (13), **characterized in that** a plurality of connection plates (2) can be plugged onto each accommodating profile (3, 4, 12) one behind the other in the longitudinal direction of the carrying rail (13).

2. Connection block according to Claim 1, **characterized in that** an accommodating profile is designed as a cable duct.

3. Connection block according to Claim 1, **characterized in that** an accommodating profile is configured as a screening element (12).

4. Connection block according to Claim 1, **characterized in that** a plurality of accommodating profiles (3, 4, 12) are provided one behind the other in the longitudinal direction of the carrying rail (13).

5. Connection block according to Claim 4, **characterized in that** the accommodating profiles (3, 4, 12) located one behind the other in the longitudinal direction of the carrying rail have connection means which correspond with one another.

6. Connection block according to Claim 5, **characterized in that** the connecting means comprise stubs (6) arranged on an end side and associated, adapted openings of the abutting accommodating profile (3, 4, 12).

7. Connection block according to Claim 1, **characterized in that**, in the region of their sides which are directed towards one another, the accommodating profiles (3, 4, 12) are provided with form-fitting elements which are in operative connection with one another.

8. Connection block according to Claim 7, **characterized in that** the form-fitting elements are designed as a groove (8) and tongue (9), preferably in dovetail form.

9. Connection block according to Claim 1, **characterized in that** each accommodating profile (3, 4, 12) comprises a cut-to-length extruded profile.

## Revendications

1. Bloc de jonction (1) qui peut être fixé sur un rail porteur (13), et qui est constitué de plusieurs plaques de jonction (2) disposées l'une derrière l'autre dans la direction longitudinale du rail porteur (13) et emboîtées sur des profilés récepteurs (3, 4, 12), plusieurs de ces profilés récepteurs (3, 4, 12) pouvant être reliés entre eux par complémentarité de forme, de manière à s'étendre côte à côte et parallèlement dans la direction longitudinale du rail porteur (13), **caractérisé en ce que** sur chaque profilé récepteur (3, 4, 12) plusieurs plaques de jonction (2) peuvent être emboîtées l'une derrière l'autre dans la direction longitudinale du rail porteur (13).

2. Bloc de jonction selon la revendication 1, **caractérisé en ce qu'**un profilé récepteur est conformé en caniveau de câble.

3. Bloc de jonction selon la revendication 1, **caractérisé en ce qu'**un profilé récepteur est réalisé en tant qu'élément de blindage (12).

4. Bloc de jonction selon la revendication 1, **caractérisé en ce que** plusieurs profilés de jonction (3, 4, 12) sont prévus l'un derrière l'autre dans la direction longitudinale du rail porteur (13).

5. Bloc de jonction selon la revendication 4, **caractérisé en ce que** les profilés récepteurs (3, 4, 12), situés l'un derrière l'autre dans la direction longitudinale du rail porteur, comportent des moyens de liaison qui correspondent les uns aux autres.

6. Bloc de jonction selon la revendication 5, **caractérisé en ce que** les moyens de liaison sont constitués de tenons (6), disposés sur un côté frontal, ainsi que d'ouvertures correspondantes et adaptées du profilé récepteur (3, 4, 12) adjacent.

7. Bloc de jonction selon la revendication 1, **caractérisé en ce que** les profilés récepteurs (3, 4, 12) sont pourvus, dans la zone de leurs côtés tournés l'un vers l'autre, d'éléments de liaison par complémentarité de forme, qui sont en liaison active entre eux.

8. Bloc de jonction selon la revendication 7, **caractérisé en ce que** les éléments de liaison par complémentarité de forme sont réalisés en tant que rainure (8) et languette (9), de préférence en queue d'aronde.

9. Bloc de jonction selon la revendication 1, **caractérisé en ce que** chaque profilé récepteur (3, 4, 12) est constitué d'un profilé extrudé mis à longueur.
